# EUROPEAN PATENT APPLICATION

(11) **EP 2 669 761 A2**
(43) Date of publication of application: **04.12.2013**
(21) Application number: 13164756.2
(22) Date of filing: 22.04.2013
(51) Int. Cl.: G06F 1/26

(54) **System, apparatus, and method of performing charging operation in host mode**

(30) Priority: 30.04.2012 KR 20120045453
(71) Applicant: Samsung Electronics Co., Ltd, Gyeonggi-do 443-742 (KR)
(72) Inventor: Lee, Woo-Kwang, 443-742 Gyeonggi-do (KR); Kim, Kyoung Hoon, 443-742 Gyeonggi-do (KR); Shin, Dong-Rak, 443-742 Gyeonggi-do (KR); Ha, Chi-Jung, 443-742 Gyeonggi-do (KR)
(74) Representative: Nederlandsch Octrooibureau

(57) **Abstract**

A system, an apparatus, and a method of performing a charging operation in a host mode, which can perform a charging operation in a host mode of a terminal. The system includes a terminal for simultaneously receiving a function of performing communication with a peripheral device and a charging function from an external accessory connected in the host mode. The external accessory simultaneously provides the charging function while performing the communication with the peripheral device to the terminal in a client mode.

## Description

### BACKGROUND OF THE INVENTION

### 1. Field of the Invention

The present invention relates to a system, an apparatus, and a method of performing a charging operation in a host mode to charge a peripheral device, such as a keyboard, a mouse, and a memory that is connected to the terminal through the USB connector, the terminal switches to a USB host mode, to perform communication with the peripheral device. More particularly, the present invention relates to a system, an apparatus, and a method of performing a charging operation in a host mode, which can perform a charging operation in a host mode of a terminal.

### 2. Description of the Related Art

A terminal, such as a mobile terminal, may perform communication by making a connection with a peripheral device through a USB connector or perform a charging function by making connection with a device such as a PC, notebook or tablet through a USB cable or with a USB auxiliary battery.

In the case where the USB auxiliary battery is connected to the terminal, data lines D+ and D- become short, so that the USB auxiliary battery is recognized as a charger "TA".

Further, when a peripheral device, such as a keyboard, a mouse, and/or a memory, is connected to the terminal through the USB connector, the terminal switches to a USB host mode, to perform communication with the peripheral device. Further, when the terminal is connected with a PC through the USB cable, the terminal switches to a USB client mode, to perform a charging function to charge, for example, a battery of the terminal.

When the terminal is switched to the USB host mode according to the connection with the peripheral device, the terminal always supplies 5V of power to the peripheral device, and when a data line D+ of the peripheral device is in a pull-up state through the power supplied from the terminal, the terminal may perform the communication with the peripheral device.

However, in USB host mode the terminal is required to always supply predetermined power to the peripheral device connected when the terminal is in the USB host mode, therefore a significant amount of power is drained from the battery of a mobile terminal.

Further, even when a tablet computer or a dock which does not require the power supply due to its own battery is connected to the terminal, the terminal is required to unconditionally supply predetermined power when the terminal is in the USB host mode, and thus the power consumption of the terminal becomes disadvantageously increased.

Further, in order to provide the USB communication and a Mobile High-Definition video Link (MHL) function, the terminal is demanded to separately include a USB port and an MHL port.

### SUMMARY OF THE INVENTION

Accordingly, an exemplary aspect of the present invention is to solve the above-stated problems occurring in the prior art and to provide a system, an apparatus, and a method of performing a charging operation in a host mode, which can simultaneously perform a charging function and communication in the host mode of a terminal.

Further, the present invention provides a system, an apparatus, and a method of performing a charging operation in a host mode, which can perform communication with a peripheral device connected to an external accessory without supplying power to the external accessory connected in the host mode of a terminal.

In accordance with an exemplary aspect of the present invention, there is provided a system for performing a charging operation in a host mode, the system preferably including: a terminal that simultaneously receives a function of performing communication with a peripheral device and a charging function from an external accessory connected in the host mode; and the external accessory configured for simultaneously providing in a client mode the charging function while/during performing the communication with the peripheral device to the terminal.

In accordance with another exemplary aspect of the present invention, there is provided an apparatus for performing a charging operation in a host mode of a terminal, the apparatus preferably including: a port connected with an external accessory; a switching unit that is configured to make a notification of a connection with the external accessory to a first power distributor while performing the communication with the peripheral device connected to the external accessory by switching to the host mode when the external accessory simultaneously provides a function of performing communication with a peripheral device and a charging function is connected to the port; and the first power distributor configured to perform charging by receiving power supplied from the external accessory during the host mode.

In accordance with another exemplary aspect of the present invention, there is provided a method of performing a charging operation in a host mode of a terminal, the method preferably including: determining by a control unit or MUIC whether an external accessory providing a function of performing communication with a peripheral device and a charging function is connected; and when it is determined by the control unit or MUIC that the external accessory is connected, performing the charging function by receiving power from the external accessory while performing the communication with the peripheral device connected to the external accessory by switching to the host mode.

### BRIEF DESCRIPTION OF THE DRAWINGS

FIG. 1 is a block diagram illustrating a system performing a charging operation in a host mode according to an exemplary embodiment of the present invention;
FIG. 2 is a diagram illustrating a USB port in the terminal of FIG. 1;
FIG. 3 is a diagram illustrating a switching unit (MUIC) in the terminal of FIG. 1; and
FIG. 4 is a flowchart illustrating a process of performing a charging operation in a host mode of a terminal according to an exemplary embodiment of the present invention.

### DETAILED DESCRIPTION

Hereinafter, exemplary embodiments of the present invention will be described with reference to the accompanying drawings. An artisan should understand and appreciate that the presently claimed invention is not limited to the examples provided in the drawings for illustrative purposes. Throughout the drawings, like elements are designated by like reference numerals.

A terminal according to an exemplary embodiment of the present invention includes, for example a portable terminal and a fixed terminal. Here, the portable terminal is an easily portable mobile electronic device, and includes a video phone, a mobile phone, a smart phone, an International Mobile Telecommunication (IMT)-2000 terminal, a Wideband Code Division Multiple Access (WCDMA) terminal, a Universal Mobile Telecommunication Service (UMTS) terminal, a Personal Digital Assistant (PDA), a Portable Multimedia Player (PMP), a Digital Multimedia Broadcasting (DMB) terminal, an E-book, a portable computer, such as a notebook computer and a tablet PC, and a digital camera, just to name a few possibilities. The fixed terminal may include a desktop personal computer, etc.

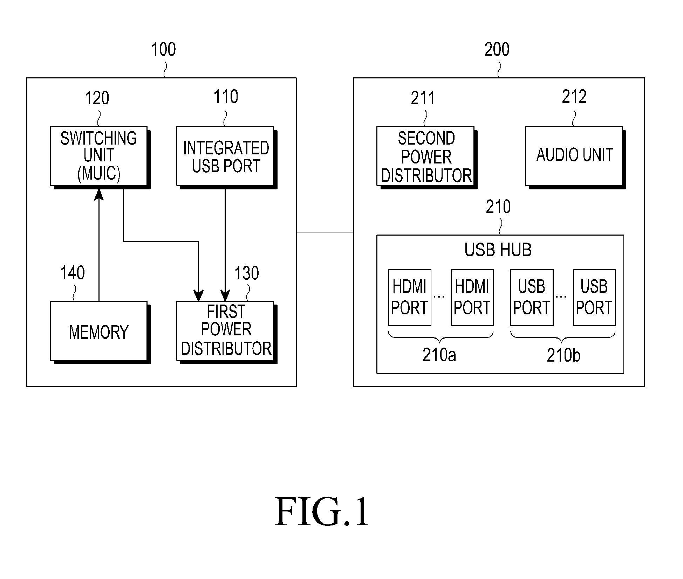

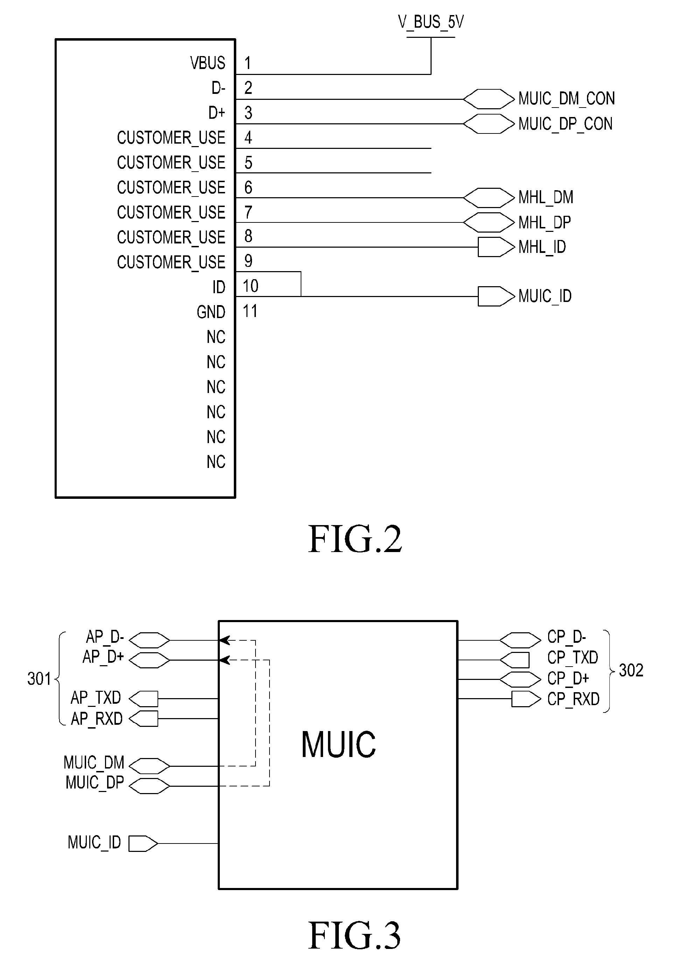

FIG. 1 is a block diagram illustrating a system for performing a charging operation in a host mode according to an exemplary embodiment of the present invention, FIG. 2 is a diagram illustrating a USB port in the terminal of FIG. 1, and FIG. 3 is a diagram illustrating a switching unit (Micro USB Integrated Circuit (MUIC)) in the terminal of FIG. 1.

Referring now to FIG. 1, the system for performing a charging operation in a host mode preferably includes a terminal 100 and an external accessory 200. When the external accessory 200 optional includes a form of a holding board, so that the terminal 100 may be connected with the external accessory 200 while the terminal 100 is held by the external accessory 200.

The terminal 100 simultaneously performs a communication function with a peripheral device and a charging function with the external accessory 200 connected in the host mode. The terminal 100 includes a USB port 110, a switching unit 120, a first power distributor 130, and a memory 140.

The USB port 110, which is an integrated USB port configured for simultaneously operating the USB communication and a Mobile High-definition Link (MHL) function, comprises a combo-USB port capable of simultaneously performing the USB communication and transmitting images and voice through the MHL.

When the integrated USB port 110 is connected with the external accessory 200, the integrated USB port 110 transmits a voltage value changed depending on a resistance value inputted from the external accessory 200 to the switching unit 120.

The integrated USB port 110 may have, for example 11 pins. Referring now to the example shown in FIG. 2, the integrated USB port 110 includes a ground (GND) line 11, a power supply/reception VBUS line 1, lines 2 and 3 for the USB communication, lines 6 to 8 for the MHL function, and a line 10 for inputting the voltage value based on which the type of external accessory connected to the terminal may be recognized. The integrated USB port 110 includes a USB port driver, and the aforementioned operation of the integrated USB port may be performed through the USB port driver.

Because the integrated USB port provides limited lines, the VBUS line, the line D+, the line D-, and the GND line, the switching unit 120 performs a switching operation such that various paths may be shared using one line.

With regard to processors, a relatively high power processor can be referred to as a main processor, or an application processor (AP). The main processor typically is considered high power relative to the low power sub-processor or sensing processor.

With regard to the present invention, the switching unit 120 can comprise an ultra low power processor, such as a "sensing processor", Micro-Controller Unit, "MCU", "Sensor Hub (Processor)", or Micro USB Integrated Circuit (MUIC). An ultra-low power processor can be referred to as any of the above.

The switching unit(MUIC) 120 may establish paths of an Application Processor (AP) USB, a Call Processor (CP) USB, an AP Universal Asynchronous Receiver Transmitter (UART), and a CP UART (lines that can connect to the aforementioned are shown in FIG. 3). Accordingly, when the switching unit 120 receives the voltage value changed depending on the resistance value inputted from the external accessory connected to the integrated USB port through the line 10 of the USB port, the switching unit 120 determines the type of the external accessory connected to the terminal.

For example, when the resistance value inputted from the external accessory is determined to be 0Ω, the switching unit 120 determines that a USB connector is connected to the peripheral device, switches the terminal to the USB host mode, supplies 5V of power to the peripheral device connected to the USB connector, and then performs the communication therewith.

However, when the resistance value inputted from the external accessory that is determined to be 40.2 Ω, the switching unit 120 determines that the external accessory 200, which simultaneously provides a function of performing the communication with the peripheral device and the charging operation, is connected.

Then, the switching unit 120 notifies of the connection of the external accessory 200 to the first power distributor 130 and performs the communication with the peripheral device connected to the external accessory 200 by establishing paths connecting data lines MUIC_DM (D-) and MUIC_DP (D+) to lines AP_D- and AP_D+ and switching the terminal 100 to be in the host mode without the supply of power to the external accessory 200.

The switching unit 120 checks whether the data line D+ of the external accessory 200 is in a pull-up state without power being supplied to the external accessory 200 in the USB host mode of the terminal. When the data line D+ of the external accessory 200 is in the pull-up state, the switching unit 120 performs an enumeration operation for recognizing the type of peripheral device connected to the external accessory 200. Then, when the switching unit 120 completes the enumeration operation, the switching unit 120 performs the communication with the peripheral device connected to a USB hub 210 of the external accessory 220 by recognizing the USB hub 210 of the external accessory 200 connected with the peripheral device.

Referring now to FIG. 3, in a structure of the MUIC, the MUIC is configured to establish the paths connecting the line MUIC_ID for receiving the voltage value depend on the resistance value of the external accessory received from the USB port and the data lines MUIC_DM (D+) and MUIC_DP (D-) according to the type of the external accessory connected to the integrated USB port to application processor AP 301 or the call processor CP 302.

Further, when the switching unit (MUIC) 120 transmits an MHL signal to the external accessory 200 through the integrated USB port 110, the external accessory 200 may receive the MHL signal and then output the received MHL signal to an external output device connected to a High Definition Multimedia Interface (HDMI) port of the external accessory 200.

The switching unit (MUIC) 120 includes a switching unit driver, and may perform the aforementioned operation of the switching unit 120 through the switching unit driver.

When the first power distributor 130 receives the notification of the connection with the external accessory 200 from the switching unit (MUIC) 120 when the terminal performs the communication with the peripheral device connected to the external accessory 200 in the USB host mode of the terminal, the first power distributor 130 performs the charging function by receiving the power supplied to the external accessory 200.

When the first power distributor 130 receives the notification indicating that the external accessory 200 is connected to the terminal 100 from the switching unit 120 through a callback function, the first power distributor 130 performs a high-speed charging (exceeding 500 mA) that is a limitation of a USB charging current by switching to a high-speed charging mode.

Since the external accessory 200 receives a power from a high-capacity charging device TA capable of receiving, for example, 2A of a current, the first power distributor 130 may receive a high-capacity charging current supplied from the external accessory 200.

The first power distributor 130 includes a first power distributor driver (not shown), and the aforementioned operation of the first power distributor 130 may be performed through the first power distributor driver.

The memory 140, which comprises non-transitory machine readable medium, stores a type of the external accessory and a voltage value according to the type of the external accessory.

With continued reference to FIG. 1, the external accessory 200 simultaneously provides the terminal 100 with the charging function while performing the communication with the peripheral device in the client mode. The external accessory 200 is preset such that the data line D+ is in the pull up state when the external accessory 200 is connected with the terminal 100.

Further, in order to provide both the USB communication and the charging function, the external accessory 200 fundamentally includes the four lines (VBUS, D+, D-, and GND) and is connected to the integrated USB port 110 of the terminal 100.

Further, the external accessory 200 preferably includes a USB hub 210, a second power distributor 211, and an audio unit 212 for outputting audio signals.

The USB hub 210 optionally includes a plurality of HDMI ports 210a to which an external output device is connectable and a plurality of USB ports 210b to which peripheral devices are connectable.

The second power distributor 220 supplies power self-charged through an external power supply device or power received through a connected external power supply device.

Since the second power distributor 220 receives the power from the high capacity charging device TA capable of receiving, for example, 2 A a current, the second power distributor 220 may supply the high-capacity charging current to the terminal 100 in the host mode of the terminal 100.

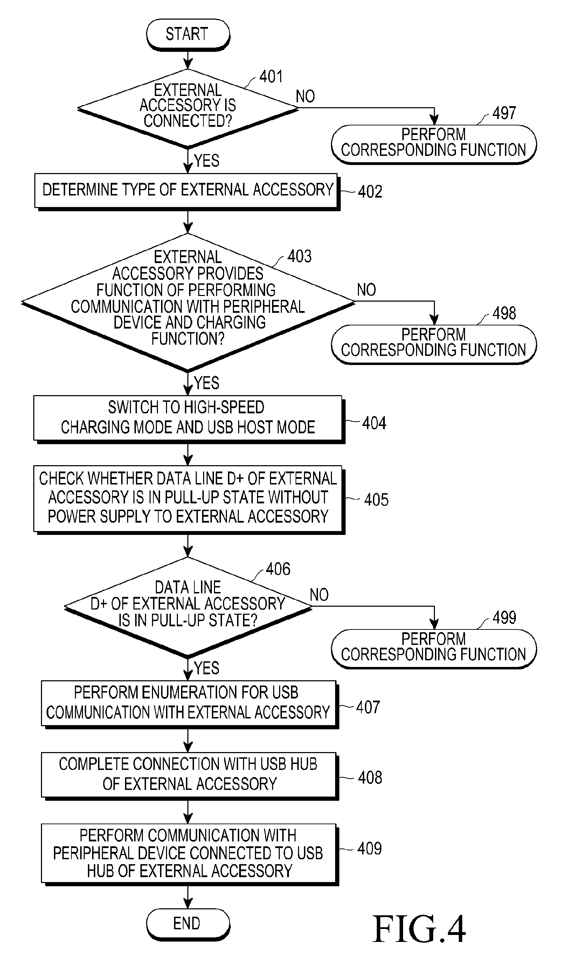

An operation of performing the charging operation in the host mode by the system of FIG. 1 will be described with reference to FIG. 4.

FIG. 4 is a flowchart illustrating exemplary operation of a process of performing the charging operation in the host mode of the terminal according to an exemplary embodiment of the present invention.

Hereinafter, the exemplary embodiment of the present invention will be described with reference to FIG, 4, together with FIGs. 1 to 3 in detail.

Referring now to FIG. 4, when it is determined at 5401 that an external accessory is connected to the USB port 100 of the terminal 100, the integrated USB port 100 transmits a voltage value changed depending on a resistance value inputted from the external accessory to the switching unit (MUIC) 120 through the line MUIC_ID.

At S402, the switching unit 120 determines a type of the external accessory connected to the USB port 100 of the terminal 100 based on the voltage value of the external accessory received from the integrated USB port 100.

When the voltage value, (i.e. based on the resistance value), of the external accessory, which simultaneously provides the function of performing the communication with the peripheral device and the charging function (S403), received from the integrated USB port 100 is 40.2Ω, the switching unit 120 detects the voltage value changed depending on the resistance value(40.2Ω) and at S404 switches to the high-speed charging mode and the USB host mode.

At S404, the switching unit 120 determines the connection of the external accessory 200 to perform the high-speed charging to the first power distributor 130 through the callback function. Accordingly, the first power distributor 130 sets the PMIC for the charging and switches to the high-speed charging mode allowing the high-speed charging by receiving the power from the second power distributor 211 which performs the high-capacity charging in the external accessory 200.

Further, in step 404, the switching unit 120 switches the terminal 100 into the host mode by establishing the paths connecting the data lines MUIC_DM (D+) and MUIC_DP (D-) to the line AP_D+ and the line AP_D- and setting a register value of a USB controller. Then, at S405 the switching unit 120 checks whether the data line D+ of the external accessory 200 is in a pull-up state without the power supply to the external accessory 200.

The external accessory 200 is preset (preconfigured) such that the data line D+ of the external accessory 200 is in the pull-up state when the connected terminal is in the USB host mode. Accordingly, contrary to a case where the data line of an external accessory goes into the pull-up state only when a predetermined power (5V) is supplied to the external accessory in the related art, the data line D+ of the external accessory 200 has already been in the pull-up state even if predetermined power is not supplied to the external accessory 200.

Accordingly, when it is determined that the data line D+ of the external accessory 200 is in the pull-up state, then at S406 the switching unit 120 detects the pull-up state and proceeds at step 407 to transmitting/receiving descriptor information while performing an enumeration operation for recognizing the peripheral device connected to the external accessory 200.

When the enumeration operation is completed, the switching unit 120 recognizes the USB hub 210 of the external accessory 200 to which the peripheral device is connected, completes the connection of the USB hub 210 of the external accessory 200, and at S408 then recognizes the audio unit 212 of the external accessory 200.

At step 409, the switching unit 120 performs the communication with the peripheral device connected with the USB port of the USB hub 210 after the completion of the connection of the USB hub 210 of the external accessory 200. Then, when the switching unit 120 transmits an MHL signal to the external accessory 200 through the USB port 110 in the USB host mode of the terminal, the external accessory 200 may receive the MHL signal and output the received MHL signal to the external output device connected to the HDMI port included in the USB hub 210 of the external accessory 200.

At steps 497. 498, 499 a corresponding function is performed when the decision in S401, S403, and S 406 are respectively "no".

The system, the apparatus, and the method of performing the charging operation in the host mode according to the present invention may be implemented with a computer readable code recorded in a computer-readable recording medium. The computer readable recording medium may include every type of recording device in which a computer system-readable data is stored. Examples of the computer readable recording medium include ROM, RAM, optical disks, magnetic tapes, floppy disks, hard disks, and non-volatile memory, and recording media such as carrier waves (e.g., transmission through the Internet). The computer readable recording medium can also be distributed in network coupled computer systems so that the computer readable code may be stored and executed in a distributed fashion.

Accordingly, the present invention provides the system, the apparatus, and the method of performing a charging operation in a host mode, so that there is enabled simultaneous performance of the charging function while performing the communication with a peripheral device in a host mode of a terminal. Further, the present invention has an effect of preventing the complete draining of a terminal's battery by receiving power, not supplying power to an external accessory having its own battery.

Further, the present invention enables the terminal to be simultaneously connected with various peripheral devices through an external accessory including a USB hub. Further, the external accessory may make the MHL connection through the USB port having a small number 11 of pins, so that the present invention enables the terminal to perform the HDMI output through the external accessory while performing a USB host operation.

The above-described methods according to the present invention can be implemented in hardware, firmware or as software or computer code that is stored on a non-transitory machine readable medium such as a CD ROM, a RAM, a floppy disk, a hard disk, or a magneto-optical disk or computer code downloaded over a network originally stored on a remote recording medium or a non-transitory machine readable medium and stored on a local non-transitory recording medium, so that the methods described herein can be loaded into hardware such as a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein. In addition, an artisan understands and appreciates that a "processor" or "microprocessor" constitute hardware in the claimed invention. Under the broadest reasonable interpretation, the appended claims constitute statutory subject matter in compliance with 35 U.S.C. §101.

The terms "unit" or "module" as used herein is to be understood as constituting hardware such as a processor or microprocessor configured for a certain desired functionality in accordance with statutory subject matter under 35 U.S.C. §101 and does not constitute software per se.

The Application Processor (AP) USB, a Call Processor (CP) USB, and MUIC are all microprocessors, processor, or controllers loaded with machine executable code and comprise hardware.

While the present invention has been shown and described with reference to certain exemplary embodiments and drawings thereof, it will be understood by those skilled in the art that various changes of the exemplary embodiments of the present invention may be made therein without departing from the spirit and scope of the invention as defined by the appended claims. Accordingly, various modifications may be performed within the main spirit of the present invention defined in the claims and those modified embodiments may are a part of the technical spirit or aspects of the present invention.

## Claims

1. A system for performing a charging operation in a host mode, the system comprising:
a terminal (100) that simultaneously performs communication with a peripheral device and receives a charging function from an external accessory (200) connected in the host mode; and
wherein the external accessory (200) simultaneously provides the charging function to the terminal while performing communication with the peripheral device in a client mode.

2. The system as claimed in claim 1, wherein the terminal comprises:
an integrated port (110) connected with the external accessory and configured to simultaneously provide USB communication and a Mobile High-definition Link (MHL) function;
a switching unit (120) that determines a connection with the external accessory (110) to a first power distributor (130) when the external accessory (200) is connected to the integrated port (110) and switches to the host mode in which the terminal (100) performs communication with the peripheral device connected to the external accessory (200); and
wherein the first power distributor (130) switches to a charging mode when the receiving notification from the switching unit of the connection with the external accessory, and the first power distributor (130) performs charging by receiving power supplied from the external accessory (200) while the terminal (100) is in a host mode.

3. The system as claimed in claim 2, **characterized in that** the integrated port (110) comprises a ground line, a VBUS line for supplying/receiving power, lines for the USB communication, lines for the Mobile High-Definition video Link (MHL) function, and a line for receiving a voltage value based on a type of the external accessory that is recognized.

4. The system as claimed in claim 2, **characterized in that** the switching unit (120) determines a type of the external accessory (200) through the voltage value changed depending on the resistance value of the external accessory received from the integrated port 110, switches the terminal to be in the host mode when the switching unit 120 determines that the external accessory simultaneously provides the function of performing communication with the peripheral device and the charging function to the terminal when connected, and performs communication with the peripheral device connected to the external accessory without power being supplied to the external accessory (200) in the host mode.

5. The system as claimed in claim 4, **characterized in that** the switching unit (120) checks whether a data line D+ of the external accessory is in a pull-up state without power being supplied to the external accessory in the host mode, performs an enumeration operation for recognizing the peripheral device connected to the external accessory when the data line D+ of the external accessory is in the pull-up state, and performs communication with the peripheral device connected to the external accessory when the enumeration operation is completed.

6. The system as claimed in claim 4, **characterized in that** when the notification of the connection of the external accessory (200) is received from the switching unit (120), the first power distributor (130)switches to a high-speed charging mode.

7. The system as claimed in claim 1, **characterized in that** the external accessory (200) comprises:
a hub (210) comprising a plurality of ports to which a plurality of peripheral devices are connected;
a second power distributor (211) that distributes power to the terminal (100); andan audio unit(212) for outputting audio signals.

8. The system as claimed in claim 7, **characterized in that** the second power distributor (211) distributes power self-charged through an external power supply device or power received through a connected external power supply device to the terminal (100).

9. The system as claimed in claim 1, **characterized in that** the external accessory (200) is preset such that a data line D+ is in a pull-up state when the terminal (100) is connected to the external accessory.

10. An apparatus for performing a charging operation in a host mode of a terminal, the apparatus comprising:
an integrated port (110) connected with an external accessory (200);
a switching unit (120) for, when the external accessory simultaneously provides a function of performing communication with a peripheral device and a charging function is connected to the port, making a notification of a connection with the external accessory (200) to a first power distributor (130)while performing the communication with the peripheral device connected to the external accessory (200) by switching to the host mode; and
wherein the first power distributor performs a charging by receiving power supplied from the external accessory during the host mode.

11. The apparatus as claimed in claim 10, **characterized in that** the external accessory (200) connected with the terminal (100) is switched to be in a client mode.

12. The apparatus as claimed in claim 10, **characterized in that** the integrated port (110) comprises a ground line, a VBUS line for supplying/receiving power, lines for USB communication, lines for an Mobile High-Definition video Link (MHL) function, and a line for receiving a voltage value based on which a type of the external accessory (200) is recognized, and simultaneously provides the USB communication and the MHL function.

13. The apparatus as claimed in claim 10, **characterized in that** the switching unit (120) determines whether the external accessory is connected through a voltage value changed depending on the resistance value of the external accessory (200) received from the integrated port (110), switches the terminal to the host mode when the switching unit 12 determines that the external accessory (200) is connected, and performs the communication with the peripheral device connected to the external accessory without power being distributed to the external accessory (200) in the host mode.

14. The apparatus as claimed in claim 13, **characterized in that** the switching unit (120) checks whether a data line D+ of the external accessory (200) is in a pull-up state without the power being distributed to the external accessory (200) in the host mode, performs an enumeration operation for recognizing the peripheral device connected to the external accessory when the data line D+ of the external accessory is in the pull-up state, and performs the communication with the peripheral device connected to the external accessory when the enumeration operation is completed.

15. The apparatus as claimed in claim 14, **characterized in that** the external accessory (200) is preset such that a data line D+ is in a pull- up state when the terminal is connected to the external accessory.

16. The apparatus as claimed in claim 10, wherein when the notification of the connection of the external accessory (200) is received from the switching unit (120) in the host mode, the first power distributor switches (130) to a high-speed charging mode.

17. The apparatus as claimed in claim 10, **characterized in that** the external accessory (200) supplies power self-charged through an external power supply device or power received through a connected external power supply device to the terminal.

18. A method of performing a charging operation in a host mode of a terminal, the method comprising:
determining whether an external accessory providing a function of performing communication with a peripheral device and a charging function is connected (S401,S403);and
when it is determined that the external accessory is connected, performing the charging function by receiving power from the external accessory while performing the communication with the peripheral device connected to the external accessory by switching to the host mode (S403).

19. The method as claimed in claim 18, **characterized in that** the external accessory (200) connected to the terminal is in a client mode.

20. The method as claimed in claim 18, **characterized in that** determining by a switching unit (120)whether the external accessory providing the function of performing the communication with the peripheral device and the charging function is connected comprises:
receiving a voltage value changed depending on the resistance value inputtd from the external accessory connected to the terminal; and
determining a type of the external accessory based on the received voltage received (S402).

21. The method as claimed in claim 18, **characterized in that** performing of the charging function comprises the switching unit (110) switching to a high-speed charging mode and performing the charging function by receiving power from the external accessory during the host mode (S402).

22. The method as claimed in claim 21, **characterized in that** the external accessory (200) supplies power self-charged through an external power supply device or power received through a connected external power supply device to the terminal.

23. The method as claimed in claim 18, **characterized in that** performing of the charging function comprises performing the communication with the peripheral device connected to the external accessory without power supply to the external accessory in the host mode.

24. The method as claimed in claim 23, **characterized in that** performing of the communication comprises:
checking whether a data line D+ of the external accessory is in a pull-up state without the power supply to the external accessory in the host mode (S405);
performing an enumeration operation for recognizing the peripheral device connected to the external accessory when the data line D+ of the external accessory is in the pull-up state (S406, 407); and
performing the communication with the peripheral device connected to the external accessory when the enumeration operation is completed (408).

25. The method as claimed in claim 24, **characterized in that** the external accessory (200) is preset such that the data line D+ is in the pull-up state when the terminal is connected to the external accessory (S406).
